# EUROPÄISCHE PATENTSCHRIFT

(11) **EP 0 824 574 B1**
(45) Veröffentlichungstag und Bekanntmachung des Hinweises auf die Patenterteilung: **13.10.1999**
(21) Anmeldenummer: 96919694.8
(22) Anmeldetag: 07.05.1996
(51) Int. Cl.: C09J 201/10, C09K 3/10

(54) **ZWEIKOMPONENTEN-KLEB-/DICHTSTOFF MIT HOHER ANFANGSHAFTFESTIGKEIT**
TWO-COMPONENT ADHESIVE/SEALING MASS WITH HIGH INITIAL ADHESIVENESS
ADHESIF/MASSE D'ETANCHEITE A DEUX COMPOSANTS A ADHERENCE INITIALE ELEVEE

(30) Priorität: 12.05.1995 DE 19517452
(43) Veröffentlichungstag der Anmeldung: 25.02.1998
(73) Patentinhaber: Henkel Teroson GmbH, 69123 Heidelberg (DE)
(72) Erfinder: PRÖBSTER, Manfred, D-69226 Nussloch (DE); SCHUMACHER, Werner, D-76149 Karlsruhe (DE)
(74) Vertreter: Hase, Christian, Dr.
(86) Internationale Anmeldenummer: EP9601899
(87) Internationale Veröffentlichungsnummer: WO9635761

(56) Entgegenhaltungen:
- WO-A-94/23768
- DE-A- 2 148 458
- DE-A- 3 545 899
- DE-A- 4 119 484
- GB-A- 2 197 326
- DATABASE WPI Week 9346 Derwent Publications Ltd., London, GB; AN 365479 XP002014122 & JP,A,05 271 642 (SUNSTAR GIKEN KK) , 19.Oktober 1993
- DATABASE WPI Week 8350 Derwent Publications Ltd., London, GB; AN 841326 XP002014123 & JP,A,58 189 276 (DAINICHI NIPPON CABLES ) , 4.November 1983
- DATABASE WPI Week 9316 Derwent Publications Ltd., London, GB; AN 131443 XP002014124 & JP,A,05 070 754 (SEKISUI CHEM IND CO LTD) , 23.März 1993

## Beschreibung

Die Erfindung betrifft einen zweikomponentigen Kleb-/Dichtstoff auf Basis silanterminierter Polyether-Prepolymerer, ein Verfahren zu dessen Herstellung und dessen Verwendung zur elastischen Verklebung von zwei oder mehreren gleichen und/oder verschiedenartigen Substraten.

In der metallverarbeitenden Industrie, der Fahrzeugindustrie, im Nutzfahrzeugbau sowie in deren Zulieferindustrie, bei der Autoreparatur oder in der Bauindustrie werden vielfach gleiche oder verschiedene metallische und nichtmetallische Substrate klebend bzw. abdichtend miteinander verbunden. Hierfür stehen bereits eine Reihe von von einkomponentigen bzw. zwei-komponentigen Kleb-/Dichtstoffen zur Verfügung. Einkomponentige Kleb-/Dichtstoffe werden in der Regel von den Anwendern bevorzugt, da hierbei keine Misch- und Dosierfehler bei der Anwendung auftreten können. Bei der Verklebung von nichtporösen Substraten ist die Verwendung von einkomponentig feuchtigkeitshärtenden Kleb-/Dichtstoffen jedoch wegen der sehr langsamen Durchhärtungsgeschwindigkeit stark eingeschränkt. Sowohl die einkomponentigen als auch die herkömmlichen bei Raumtemperatur aushärtbaren zweikomponentigen Kleb-/Dichtstoffe sind in einem weiteren Punkt stark verbesserungsbedürftig: unmittelbar nach dem Zusammenfügen der zu verbindenden Teile haben sie eine sehr geringe Anfangsfestigkeit, so daß die verbundenen Teile zunächst mechanisch fixiert werden müssen, bis die Klebefuge eine hinreichende Festigkeit erreicht hat.

Es bestand daher die Aufgabe, Kleb-/Dichtstoff-Zusammensetzungen bereitzustellen, die bereits unmittelbar nach der Applikation und dem Fügen der Teile eine so hohe Anfangshaftfestigkeit aufweisen, daß bei fast allen Anwendungsfällen eine mechaniscne Fixierung nicht notwendig ist.

Es wurde jetzt gefunden, daß zweikomponentige Kleb-/Dichtstoffe auf der Basis silanterminierter Polyether-Prepolymerer, deren Komponente A ein einkomponentig, feuchtigkeitshärtender Kleb-/Dichtstoff ist und deren Komponente B ein Vernetzer und/oder Beschleuniger für die Komponente A ist, diese Forderungen in überraschend guter Weise erfüllen. Die erfindungsgemäßen Kleb-/Dichtstoffe haben nicht nur eine sehr hohe Anfangshaftfestigkeit, sie haben auf einer Vielzahl von metallischen und nichtmetallischen Substraten ein so gutes Haftverhalten, daß eine Oberflächenvorbehandlung mit Hilfe eines sogenannten Primers in aller Regel nicht notwendig ist.

Als silanterminierte Prepolymere im Sinne dieser Erfindung sollen dabei Polymere mit einem Molekulargewichtsbereich zwischen 1000 und 50000 verstanden werden, die mindestens eine reaktive Endgruppe der folgenden Formel enthält: 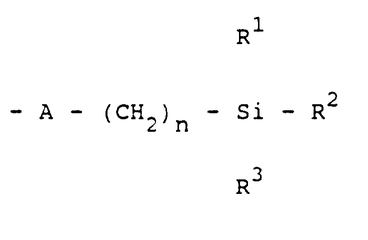 wobei A ein 1,5- bis 4-wertiger Rest eines Polyethers darstellt, n eine Zahl zwischen 1 und 4 ist und die Reste R¹ bis R³ ein nichthydrolysierbarer C1-bis C4-Alkylrest und/oder ein hydrolysierender Alkoxyrest, Acetoxyrest, Oximetherrest oder Amidrest sein können. Vorzugsweise sind mindestens zwei dieser Reste hydrolysierbar.

Die silanterminierten Prepolymere auf der Basis von Polyethern können prinzipiell auf verschiedene Weise hergestellt werden:
- hydroxyfunktionelle Polyether werden mit ungesättigten Chlorverbindungen, z.B. Allylchlorid, in einer Ethersynthese in Polyether mit endständigen olefinischen Doppelbindungen umgesetzt, die ihrerseits mit Hydrosilanverbindungen, die hydrolysierbare Gruppen haben, wie z.B. HSi(OCH₃)₃ in einer Hydrosilylierungsreaktion unter dem katalytischen Einfluß von beispielsweise Übergangsmetallverbindungen der 8. Gruppe zu silanterminierten Polyethern umgesetzt werden.
- In einem anderen Verfanren werden die olefinisch ungesättigte Gruppen enthaltenden Polyether mit einem Mercaptosilan wie z.B. 3-Mercaptopropyltrialkoxysilan umgesetzt.
- Bei einem weiteren Verfahren werden zunächst Hydroxylgruppen-haltige Polyether mit Di- oder Polyisocyanaten umgesetzt, die dann ihrerseits mit aminofunktionellen Silanen oder mercaptofunktionellen Silanen zu silanterminierten Prepolymeren umgesetzt werden.

Eine weitere Möglichkeit sieht die Umsetzung von hydroxyfunktionellen Polyethern mit isocyanatofunktionellen Silanen wie z.B. 3-Isocyanatopropyltrimethoxysilan vor.

Diese Herstellverfahren und die Verwendung der oben genannten silanterminierten Prepolymeren in Kleb-/Dichtstoffanwendungen sind beispielsweise in den folgenden Patentschriften genannt: US-A-3971751, US-A-4960844, US-A-3979344, US-A-3632557, DE-A-4029504, EP-A-601021, EP-A-370464.

Die EP-A-370463, EP-A-370464 sowie die EP-A-370531 beschreiben zwei- oder mehrkomponentige Klebstoffzusammensetzungen, deren eine Komponente ein flüssiges organisches elastomeres Polymer mit wenigstens einer Silan-enthaltenden reaktiven Gruppe pro Molekül sowie ein Härtungsmittel für ein Epoxyharz enthält und deren zweite Komponente ein Epoxidharz enthält sowie ggf. einen Härtungskatalysator für das silangruppenenthaltende elastomere Polymer. Als Härtungsmittel für die Epoxy-Komponente werden dabei die in der Epoxidchemie üblichen Di- oder Polyamine, Carbonsäureanhydride, Alkohole und Phenole und ggf. typische Katalysatoren für die Epoxidreaktion, wie tertiäre Amine, deren Salze, Imidazole, Dicyandiamid usw. vorgeschlagen. Derartige zweikomponentige Systeme haben die spezifischen Nachteile aller Standard-Zweikomponentensysteme: die Härtungsgeschwindigkeit sowie die Endeigenschaften des ausgehärteten Klebstoffes hängen in sehr hohem Maße von der korrekten Einhaltung des Mischungsverhältnisses der Komponenten sowie von der Vollständigkeit der Durchmischung ab. Die EP-A-520426 beschreibt härtbare Zusammensetzungen auf der Basis von silangruppenenthaltenden Oxyalkylenpolymeren, die Mikrohohlkugeln enthalten und dadurch spezifisch leichte härtbare Zusammensetzungen ermöglichen. Es wird dort angegeben, daß diese Zusammensetzungen auch als 2-Komponentensysteme eingesetzt werden können, wobei die eine Komponente das Oxyalkylen, den Füllstoff und den Weichmacher enthält, und die zweite Komponente Füllstoff, Weichmacher und einen Kondensationskatalysator. Keine dieser Schriften zum Stand der Technik macht Angaben darüber, ob die dort beschriebenen Zusammensetzungen eine ausreichende hohe Anfangshaftfestigkeit besitzen, um ein mechanisches Fixieren unmittelbar nach dem Fügen der Teile zu vermeiden. Weiterhin werden keine Angaben gemacht, ob bei den 2-komponentigen Zusammensetzungen gemäß o.g. Stand der Technik die Komponente A, die das silanterminierte Prepolymer enthält, für sich alleine vollständig aushärtet.

Die DE-C-35 45 899 beschreibt einen zweikomponentigen Kleb-/Dichtstoff auf der Basis einer einkomponentig feuchtigkeitshärtenden Komponente A und einer Vernetzer- oder Beschleunigerkomponente B. Dabei kann A gewählt sein aus feuchtigkeitshärtenden silanterminierten Polyurethan-Prepolymeren oder feuchtigkeitshärtenden Silikonen. Zweikomponentige Kleb-/Dichtstoffe auf der Basis von silanterminierten Polyether-Prepolymeren werden nicht genannt.

Bei den 2-komponentigen Kleb-/Dichtstoffen gemäß vorliegender Erfindung enthält die Komponente A ein Silangruppen-enthaltendes Polyether-Prepolymer, Füllstoffe, Weichmacher, Haftvermittler, Rheologiehilfsmittel, Stabilisatoren, Farbpigmente sowie weitere übliche Hilfs- und Zusatzstoffe. Aus diesem Grunde kann die Komponente A für sich alleine als einkomponentiger, feuchtigkeitshärtender Kleb-/Dichtstoff eingesetzt werden und erzielt so bereits unmittelbar nach dem Fügen der Teile eine sehr hohe Anfangshaftfestigkeit.

Als reaktive silangruppenenthaltende Polyether-Prepolymere (silanterminierte Prepolymere) im Sinne dieser Erfindung können grundsätzlich alle oben beschriebenen silanterminierten Polyether-Prepolymere eingesetzt werden, besonders bevorzugt sind jedoch die Alkoxysilangruppen-enthaltenden Oxyalkylenpolymere, wie sie erstmals in der US-A-3971751 beschrieben wurden. Diese Prepolymeren sind unter dem Namen "MS-Polymer" (Handelsname der Firma Kanegafuchi) im Handel erhältlich.

Als Weichmacher können alle für Kleb-/Dichtstoffe üblichen Weichmacher verwendet werden, z.B. die diversen Phthalsäureester, Arylsulfonylsäureester, Alkyl- und/oder Aryl-phosphate sowie die Dialkylester der aliphatischen und aromatischen Dicarbonsäuren.

Als Füllstoffe und/oder Pigmente können alle gängigen beschichteten oder unbeschichteten Füllstoffe und/oder Pigmente eingesetzt werden, vorzugsweise sollten diese jedoch gering in ihrem Wassergehalt sein. Beispiele für geeignete Füllstoffe sind Kalksteinmehl, natürliche, gemahlene Kreiden (Calciumcarbonate oder Calcium-Magnesiumcarbonate), gefällte Kreiden, Talk, Glimmer, Tone oder Schwerspat. Beispiele für geeignete Pigmente sind Titandioxid, Eisenoxide oder Ruß.

Weiterhin enthält die Komponente A vorzugsweise niedermolekulare Alkoxysilanverbindungen wie z.B. Vinylalkoxysilane, 3-Aminopropyltrialkoxysilane, 3-Glycidyl-oxypropyltrialkoxysilane oder deren Kombination.

Weiterhin sollte die Komponente A einen Silanolkondensationskatalysator (Härtungskatalysator) enthalten, Beispiele für derartige Katalysatoren sind Titansäureester wie Tetrabutyltitanat, Tetrapropyltitanat, Zinn-carboxylate wie Dibutylzinndilaurat, Dibutylzinnmaleat, Dibutylzinndiacetat, Zinn(II)octoat, Zinnnaphthenat, Zinnalkoxylate, Dibutylzinnacetylacetonat, Aminoverbindungen wie Morpholin, N-Methylmorpholin, 2-Ethyl-2-Methylimidazol, 1,8-Diazadicyclo(5.4.0)undecen-7 (DBU), Carbonsäuresalze dieser Amine oder langkettige aliphatische Amine.

Weiterhin kann die Komponente A der erfindungsgemäßen Kleb-/Dichtstoffe ggf. zusätzliche Stabilisatoren enthalten. Als "Stabilisatoren" im Sinne dieser Erfindung sind Antioxidantien, UV-Stabilisatoren oder Hydrolyse-Stabilisatoren zu verstehen. Beispiele hierfür sind die handelsüblichen sterisch gehinderten Phenole und/oder Thioether und/oder substituierten Benzotriazole und/oder Amine vom "HALS"-Typ (Hinderered Amine Light Stabilizer).

Die Komponente B der erfindungsgemäßen 2-komponentigen Kleb-/Dichtstoffe enthält einen Vernetzer und/oder Beschleuniger für die Komponente A. Dieser Vernetzer und/oder Beschleuniger kann beispielsweise der oben genannten niedermolekularen organofunktionellen Silane sein, ggf. in Kombination mit einem oder mehreren der o.g. Katalysatoren. In einer besonders bevorzugten Ausführungsform enthält die Komponente B eine pastöse, stabile Mischung aus einem oder mehreren Weichmachern, Wasser, ein oder mehrere Verdickungsmittel sowie ggf. weitere Hilfsstoffe wie beispielsweise Füllstoffe, Thixotropiermittel oder Tenside.

Als Verdickungsmittel für die bevorzugte Ausführungsform werden wasserlösliche bzw. wasserquellbare Polymere oder anorganische Verdickungsmittel bevorzugt. Beispiele für organische natürliche Verdickungsmittel sind Agar-agar, Carrageen, Tragant, Gummi arabicum, Alginate, Pektine, Polyosen, Guar-Mehl, Stärke, Dextrine, Gelatine, Casein. Beispiele für organische voll- oder teilsynthetische Verdickungsmittel sind Carboxymethylcellulose, Celluloseether, Hydroxyethylcellulose, Hydroxypropylcellulose, Poly(meth)acrylsäurederivate, Polyvinylether, Polyvinylalkohol, Polyamide, Polyimine. Beispiele für anorganische Verdickungsmittel sind Polykieselsäuren, hochdisperse, pyrogene, hydrophile Kieselsäuren, Tonmineralien wie Montmorillonit.

Sowohl die Komponente A als auch die Komponente B kann gegebenenfalls gängige Rheologiehilfsmittel, wie z.B. hochdisperse Kieselsäuren, Bentone, Harnstoffderivate, fibrilierte oder Pulp-Kurzfasern oder Rizinusöl-Derivate enthalten.

Wie bereits oben erwähnt, ist die Zusammensetzung der erfindungsgemäßen Komponente A so beschaffen, daß diese für sich allein vollständig aushärtet und vergleichbare Endfestigkeitswerte liefert wie die Mischung aus Komponente A und Komponente B. Daher ist dieses Klebstoffsystem sehr unempfindlich gegen Misch- und Dosierfehler zwischen Komponente A und Komponente B, daher kann das Verhältnis von Komp. A und B in sehr weiten Bereichen variiert werden, ohne daß die Endfestigkeit der Klebeverbindung darunter leidet. Dies ist gegenüber herkömmlichen zweikomponentigen Kleb-/Dichtstoffen ein entscheidender Vorteil. Gegenüber einkomponentigen Systemen besteht der Vorteil darin, daß auch Verklebungen von nichtporösen Substraten weitgehend unabhängig von der Luftfeuchtigkeit schnell durchhärten. Die Komp. A wird mit der Komp. B in einem Verhältnis von 5 : 1 bis 15 : 1 Gewichtsteilen, vorzugsweise 8 : 1 bis 12 : 1 Gewichtsteilen vermischt.

Wie bereits eingangs erwähnt, zeichnen sich die erfindungsgemäßen Kleb-/Dichtstoffe dadurch aus, daß die Oberflächen der meisten Substrate keinerlei Vorbehandlung durch einen Primer benötigen. Dies gilt insbesondere für die metallischen Substrate Aluminium, eloxiertes Aluminium, Stahl (insbesondere Edelstahl), Glas, Holz und eine große Anzahl von Kunststoffen.

Anhand der nachfolgenden Beispiele soll die Erfindung näher erläutert werden.

### Beispiel 1 (Herstellung einer Vernetzer-/Beschleunigerpaste):

In einem Planetenmischer wurden unter hoher Scherung 39 Gewichtsteile gefällte, gecoatete Kreide, 53 Gewichtsteile Alkylsulfonsäureester des Phenols, 7,28 Gewichtsteile Wasser und 0,72 Gewichtsteile Methylhydroxyethylcellulose gemischt, bis sie homogen waren.

### Bestimmung der Anfangshaftfestigkeit

Die Anfangshaftfestigkeit von Verklebungen wurde unter statischer Belastung in Anlehnung an die DIN 53284 und DIN 53273 bestimmt. Dazu wurde ein eloxiertes Aluminiumblech mit dem zu testenden Kleb-/Dichtstoff in Form einer Raupe als Strang beschichtet. Ein eloxierter Aluminiumblechstreifen von 200mm Länge und 15mm Breite wurde so auf die Raupe gedrückt, daß eine 120mm lange, 15mm breite und lmm dicke Klebefuge entstand. Unmittelbar nach der Applikation des Kleb-/Dichtstoffes wurde das Blech senkrecht hängend in ein Stativ eingespannt, und der verklebte Streifen an seinem unten überstehenden Ende mit einem Gewicht von 300 g belastet und die Zeit bestimmt, nach der die Verklebung gebrochen war.

Die zum Vergleich verwendeten einkomponentigen Kleb-/ Dichtstoffe wurden dabei direkt aufgetragen, die zweikomponentigen Kleb-/Dichtstoffe wurden mit Hilfe eines Statikmischers miteinander vermischt und danach sofort aufgetragen.

Bei dem erfindungsgemäßen Zweikomponenten-Kleb-/Dichtstoff wurde als Komponente A der im Handel unter dem Namen Terostat 9220 (Firma Teroson) erhältliche Kleb-/Dichtstoff auf Basis von Silan-modifizierter Polymerer (MS(R)-Polymer, Handelsname der Fa. Kanegafuchi) verwendet, der mit der obigen Härter-/Vernetzerpaste als Komponente B im Mischungsverhältnis von 10 Gewichtsteilen Komponente A zu 1 Gewichtsteil Komponente B gemischt wurde.

Zum Vergleich wurde ein schneller zweikomponentiger Kleb-/Dichtstoff gemäß Stand der Technik verwendet (Teromix 6700, Fa. Teroson).

**Tabelle 1**

| Haftfestigkeiten der Probeverklebung bei 0,3 kg Belastung, unmittelbar nach Anlegen der Prüfkörper | |
|---|---|
| Kleb-/Dichtstoff | Zeit |
| Teromix 6700 (2K-PU-Klebstoff) | 3sec |
| Terostat 91 (1K-PU-Karosserie-Dichtmasse, Fa. Teroson) | 15sec |
| Terostat 930 (1K-MS-Universaldichtstoff) | 25sec |
| Terostat 9220 (1K-MS-Kleb-/Dichtstoff mit hoher Anfangsfestigkeit, Fa. Teroson) | 55sec |
| Erfindungsgemäßer 2K-Kleb-/Dichtstoff | 50sec |

**Tabelle 2**

| Haftfestigkeiten der Probeverklebung, bei 0,3 kg Belastung 6min nach Anlegen der Prüfkörper | |
|---|---|
| 2K-PU-Klebstoff | 13sec |
| 1K-MS-Kleb-/Dichtstoff mit hoher Anfangsfestigkeit | 55sec |
| Erfindungsgemäßer Kleb-/Dichtstoff | hält |

**Tabelle 3**

| Haftfestigkeiten der Probeverklebung, bei 1 kg Belastung, 15min nach Anlegen der Prüfkörper | |
|---|---|
| 2K-PU-Klebstoff | 30mm Abrutsch |
| Erfindungsgemäßer Kleb-/Dichtstoff | hält |

Aus den obigen Versuchen wird deutlich, daß die Anfangshaftfestigkeit des erfindungsgemäßen zweikomponentigen Kleb-/Dichtstoffes unmittelbar nach Prüfkörperherstellung nahezu gleich groß ist wie die eines einkomponentigen MS-Kleb-/Dichtstoffes mit hoher Anfangshaftfestigkeit, nach kurzer Zeit ist jedoch die Haftfestigkeit des erfindungsgemäßen Kleb-/Dichtstoffes wesentlich höher als bei dem entsprechenden einkomponentigen Material.

Wie aus der Tabelle 2 hervorgeht, ist ein schneller, zweikomponentiger PU-Klebstoff ebenso wenig wie ein einkomponentiger Kleb-/Dichtstoff auf Basis von MS-Polymeren in der Lage, ein 0,3 kg schweres Belastungsgewicht zu halten, während der erfindungsgemäße Kleb-/Dichtstoff dieser Belastung standhält.

Aus Tabelle 3 ersieht man, daß selbst 15min nach Anlegen der Prüfkörper bei einer Belastung von 1kg die Verklebung mit dem 2K-PU-Klebstoff innerhalb der ersten Minute noch um 30mm abrutscht, während die Verklebung mit dem erfindungsgemäßen Kleb-/Dichtstoff diese Belastung aushält.

## Patentansprüche

1. Zweikomponentiger Kleb-/Dichtstoff auf Basis silanterminierter Polyether-Prepolymerer, **dadurch gekennzeichnet,** daß die Komponente A ein einkomponentig, feuchtigkeitshärtender Kleb-/Dichtstoff mit hoher Anfangshaftfestigkeit ist und die Komponente B ein Vernetzer und/oder Beschleuniger für die Komponente A ist.

2. Zweikomponentiger Kleb-/Dichtstoff gemäß Anspruch 1, **dadurch gekennzeichnet,** daß die Komponente A allein oder die Mischung aus A und B unmittelbar nach Applikation und Fügen der zu verbindenden Teile eine Anfangshaftigkeit von mindestens 0,16N/cm², gemessen in Anlehnung an DIN 53273 hat.

3. Zweikomponentiger Kleb-/Dichtstoff gemäß mindestens einem der vorhergehenden Ansprüche, **dadurch gekennzeichnet,** daß die Komponente B eine pastöse, stabile Mischung aus Weichmacher(n), Wasser, Verdickungsmitteln und ggf. weiteren Hilfsstoffen ist.

4. Zweikomponentiger Kleb-/Dichtstoff gemäß Anspruch 3, **dadurch gekennzeichnet,** daß als Verdickungsmittel
- organische natürliche Verdickungsmittel aus der Gruppe Agar-Agar, Carrageen, Tragant, Gummi arabicum, Alginate, Pektine, Polyosen, Guar-Mehl, Stärke, Dextrine, Gelatine, Casein,
- organische voll- oder teilsynthetische Verdickungsmittel aus der Gruppe Carboxymethylcellulose, Celluloseether, Hydroxyethylcellulose, Hydroxypropylcellulose, Poly(meth)acrylsäurederivate, Polyvinylether, Polyvinylalkohol, Polyamide, Polyimine oder
- anorganische Verdickungsmittel aus der Gruppe Polykieselsäuren, hochdisperse pyrogene Kieselsäuren, Tonmineralien wie Montmorillonite verwendet werden.

5. Verwendung der Kleb-/Dichtstoffe gemäß mindestens einem der vorhergehenden Ansprüche zur elastischen Verklebung von zwei oder mehreren gleichen und/oder verschiedenartigen Substraten.

6. Verfahren zum primerlosen Verbinden von zwei oder mehreren gleichen und/oder verschiedenen Substraten, **dadurch gekennzeichnet,** daß
- ein Kleb-/Dichtstoff nach mindestens einem der Ansprüche 1 bis 4 auf ein Substrat aufgetragen wird,
- das oder die weitere(n) Substrat(e) auf die freie Kleb-/Dichtstoff-Oberfläche gefügt wird (werden)
- und der so hergestellte Verbund ohne weitere mechanische Fixierung sofort weiterverarbeitet und/oder transportiert werden kann.

7. Verfahren gemäß Anspruch 6, **dadurch gekennzeichnet,** daß vor der Applikation die Komponente A mit der Komponente B in einem Verhältnis von 5:1 bis 15:1 Gewichtsteilen, vorzugsweise 8:1 bis 12:1 Gewichtsteilen gemischt wird.

8. Verfahren gemäß Anspruch 6 und/oder 7, **dadurch gekennzeichnet,** daß als zu verbindende Substrate Bauteile aus (ggf. lackierten) Metallen wie Aluminium, Stahl (insbesondere Edelstahl) und/oder Glas, Holz oder Kunststoffe verwendet werden.

## Claims

1. A two-component adhesive/sealant based on silane-terminated polyether prepolymers, characterized in that component A is a one-component moisture-curing adhesive/sealant with high early strength while component B is a crosslinker and/or accelerator for component A.

2. A two-component adhesive/sealant as claimed in claim 1, characterized in that component A alone or the mixture of components A and B has an early strength immediately after application and after the parts to be joined have been fitted together of at least 0.16 N/cm² as measured in accordance with DIN 53273.

3. A two-component adhesive/sealant as claimed in at least one of the preceding claims, characterized in that component B is a paste-form stable mixture of plasticizer(s), water, thickeners and optionally other auxiliaries.

4. A two-component adhesive/sealant as claimed in claim 3, characterized in that the thickeners used are
- organic natural thickeners from the group consisting of agar agar, carrageen, tragacanth, arabic gum, alginates, pectins, polyoses, guar flour, starch, dextrins, gelatin, casein,
- organic fully synthetic or partly synthetic thickeners from the group consisting of carboxymethyl cellulose, cellulose ethers, hydroxyethyl cellulose, hydroxypropyl cellulose, poly(meth)acrylic acid derivatives, polyvinyl ether, polyvinyl alcohol, polyamides, polyimines or
- inorganic thickeners from the group consisting of polysilicic acids, highly disperse pyrogenic silicas, clay minerals, such as montmorillonites.

5. The use of the adhesives/sealants claimed in at least one of the preceding claims for the elastic bonding of two or more like and/or different substrates.

6. A process for the primerless bonding of two or more like and/or different substrates, characterized in that
- an adhesive/sealant according to at least one of claims 1 to 4 is applied to a substrate,
- the other substrate(s) is/are applied to the free adhesive/sealant surface
- and the bond thus established can be immediately further processed and/or transported without further mechanical fixing.

7. A process as claimed in claim 6, characterized in that, before application, component A is mixed with component B in a ratio of 5:1 to 15:1 parts by weight and preferably in a ratio of 8:1 to 12:1 parts by weight.

8. A process as claimed in claim 6 and/or 7, characterized in that parts of (optionally painted) metals, such as aluminium, steel (particularly stainless steel) and/or glass, wood or plastics are used as the substrates to be joined.

## Revendications

1. Adhésif/masse d'étanchéité à deux composants à base de prépolymères de polyéther à terminaison silane,
caractérisé en ce que
le composant A est un adhésif/masse d'étanchéité à un composant durcissant à l'humidité à grande force d'adhésion, et en ce que le composant B est un agent réticulant et/ou un accélérateur pour le composant A.

2. Adhésif/masse d'étanchéité à deux composants selon la revendication 1,
caractérisé en ce que
le composant A seul ou le mélange de A et de B immédiatement après application et jonction des pièces à assembler présente une adhésivité initiale d'au moins 0,16 N/cm², mesurée selon la norme DIN 53 273.

3. Adhésif/masse d'étanchéité à deux composants selon l'une des revendications précédentes,
caractérisé en ce que
le composant B est un mélange stable pâteux d'un ou plusieurs plastifiants, d'eau, d'épaississants, et le cas échéant d'autres adjuvants.

4. Adhésif/masse d'étanchéité à deux composants selon la revendication 3,
caractérisé en ce qu'
- on utilise comme agent épaississant
- des épaississants naturels organiques du groupe constitué par l'agar-agar, la carraghénine, la gomme adragante, la gomme arabique, les alginates, les pectines, les polyoses, la farine de guar, l'amidon, les dextrines, les gélatines, la caséine,
- les épaississants organiques entièrement ou partiellement synthétiques du groupe de la carboxyméthylcellulose, des éthers de cellulose, de l'hydroxyéthyl cellulose, de l'hydroxypropylcellulose, des dérivés d'acide poly(méth)acrylique, de l'éther polyvinylique, de l'alcool polyvinylique, des polyamides, des polyimides ou des épaississants inorganiques du groupe des acides polysiliciques, des acides siliciques pyrogènes hautement dispersés, des minerais d'argile comme la montmorillonite.

5. Utilisation des adhésifs/masses d'étanchéité selon au moins l'une des revendications précédentes pour le collage élastique de deux ou plusieurs substrats identiques et/ou différents.

6. Procédé d'assemblage sans apprêt de deux ou plusieurs substrats identiques et/ou différents
caractérisé en ce que
- on dépose un adhésif/masse d'étanchéité selon au moins l'un des revendications 1 à 4 sur un substrat,
- on joint le ou les autres substrats sur la surface libre de l'adhésif/masse d'étanchéité,
- et en ce qu'on traite plus avant immédiatement le composite ainsi produit, sans autre fixation mécanique, ou en ce qu'on peut le transporter.

7. Procédé selon la revendication 6,
caractérisé en ce qu'
avant l'application on mélange le composant A avec le composant B dans un rapport de 5:1 à 15:1 parties en poids, de préférence de 8:1 à 12:1 parties en poids.

8. Procédé selon la revendication 6 et/ou 7,
caractérisé en ce qu'
on utilise comme substrats à assembler des pièces de métaux (éventuellement vernis) comme l'aluminium, l'acier (en particulier l'acier spécial) et/ou le verre, le bois ou les matières plastiques.
